# EUROPÄISCHE PATENTSCHRIFT

(11) **EP 2 397 706 B1**
(45) Veröffentlichungstag und Bekanntmachung des Hinweises auf die Patenterteilung: **28.11.2012**
(21) Anmeldenummer: 10166432.4
(22) Anmeldetag: 18.06.2010
(51) Int. Cl.: F16B 27/00

(54) **Magazinstreifen**
Cartridge strip
Ruban de stockage

(43) Veröffentlichungstag der Anmeldung: 21.12.2011
(73) Patentinhaber: Fabricius Fastener GmbH, 33100 Paderborn (DE)
(72) Erfinder: Fabricius, Jürgen, 33102 Paderborn (DE)
(74) Vertreter: Reimann, Silke

(56) Entgegenhaltungen:
- WO-A1-01/09526
- WO-A1-2010/066256

## Beschreibung

Die Erfindung betrifft einen Magazinstreifen in länglicher Quaderform mit einer Reihe von Durchgangsöffnungen für die Magazinierung von Befestigungsmitteln zur Verarbeitung in einer Setzmaschine.

Es ist eine Vielzahl von Ausführungsformen für Magazinstreifen bekannt, die zur Aufnahme von Befestigungsmitteln dienen. Meist sind dies einfache Papp- oder Kunststoffstreifen mit Löchern.

Bei der Verarbeitung von Schrauben oder anderen Befestigungsmitteln in einer Setzmaschine ist aber eine genaue Ausrichtung der Achse der Befestigungsmittel zur Achse der Setzmaschine erforderlich. Dies wird bei einfachen Streifen nicht gewährleistet.

Dafür sind Magazinierstreifen bekannt, etwa aus der Patentschrift DE 34 36 171 C2, die aus Kunststoff bestehen und biegesteif sein sollen. Sie sind damit nur für Setzmaschinen geeignet, die eine lineare Zuführung der magazinierten Befestigungselemente vorsehen. Meist werden solche Magazinierstreifen auch aus einem solchen Kunststoff hergestellt, bei dem bei der Verarbeitung eines Befestigungselementes jeweils das entsprechende Stück des Magazinierstreifens abbricht. Damit fallen bei der Verarbeitung viele kleine Reste an, die aufgesammelt und entsorgt werden müssen.

In der internationalen Patentanmeldung WO 2010/066256A1 ist ein Endlos-Magazinstreifen für die Aufnahme von Schrauben mit lackierten Köpfen beschrieben, der aus einem oberen Metallstreifen und einem darunter liegenden dickeren Kunststoffstreifen zusammengefügt ist.

Es ist die Aufgabe der Erfindung, einen Magazinstreifen für verschiedene Befestigungselemente vorzustellen, der biegsam und damit auch in gebogene Magazine einsetzbar ist und der bei der Verarbeitung nicht auseinander bricht.

Diese Aufgabe wird durch den Magazinstreifen gemäß Anspruch 1 gelöst.

Die abhängigen Ansprüche beschreiben vorteilhafte Ausgestaltungen der Erfindung.

Der Magazinstreifen in länglicher Quaderform mit einer Reihe von Durchgangsöffnungen besteht aus mindestens zwei flexiblen Schichten, wobei die in Verarbeitungsrichtung unterste Schicht aus härterem Material als die darüber liegenden Schichten besteht. Da alle Schichten flexibel sind, ist der Magazinstreifen biegsam und kann auch in gebogene Magazine von Setzmaschinen eingeführt werden. Die unterste Schicht ist härter als die darüberliegende und übernimmt damit die präzise Führung des Befestigungselementes.
Die Breite und Höhe des Magazinstreifens sind so gewählt dass er in handelsüblichen Setzmaschinen genutzt werden kann. Diese Form ist aber auch für eine normale Aufbewahrung und manuelle Verarbeitung, etwa mit einem Akkuschrauber, geeignet.

Die Materialien des Magazinstreifens sind so gewählt, dass sie bei der Verarbeitung einen problemlosen Durchschub der Befestigungselemente gewährleisten, der Magazinstreifen aber bei der Verarbeitung auch nicht abbricht. Eine bevorzugte Ausführungsform der Schichten sieht verschieden harten Schaumstoff vor. Damit können die Anforderungen für eine einfache Einsetzbarkeit der Befestigungselemente und eine präzise Führung problemlos realisiert werden. Auch bricht dann der Magazinstreifen bei der Verarbeitung nicht ab.

In einer anderen Ausführung besteht die unterste Schicht aus Pappe. Damit können die gleichen Anforderungen erfüllt werden.
Die Schichten des Magazinstreifens sind günstigerweise miteinander verklebt oder verschweißt.

Der Magazinstreifen ist für die verschiedensten Befestigungsmittel geeignet. So können dies Schrauben, Nieten, Verbindungsbolzen, Schweißnippel oder dergleichen sein. Dabei besitzen die Durchgangsöffnungen einen Durchmesser, der in etwa dem Kerndurchmesser des zu verarbeitenden Befestigungsmittels entspricht. Damit wird eine problemlose Verarbeitung erreicht.

Der Magazinstreifen ist vorzugsweise so lang ausgeführt, dass er 10 oder 25 Befestigungsmittel aufnehmen kann. Damit kann er in handelsüblichen Setzgeräten benutzt werden oder er kann auch bei manueller Verarbeitung als Aufbewahrungsmagazin dienen.

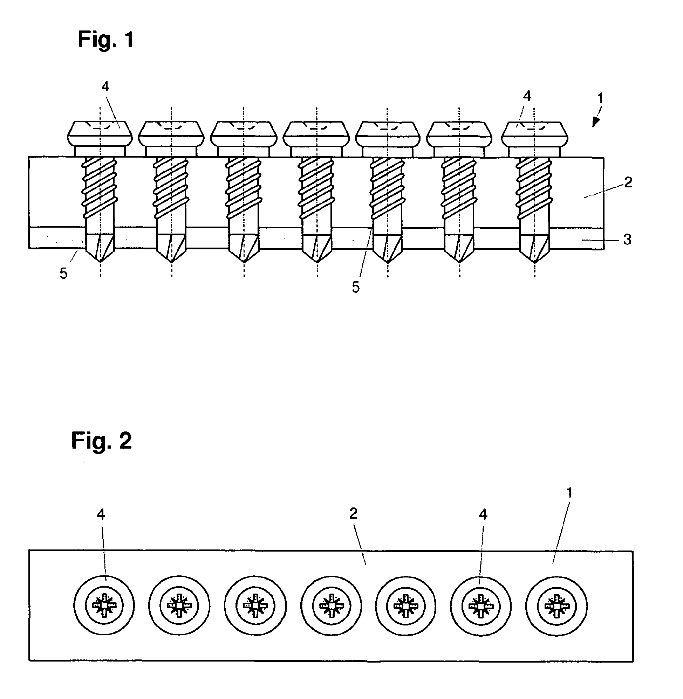

Eine Ausführungsform des Magazinstreifens wird anhand der Figuren 1 und 2 näher beschrieben. Es zeigen:
Fig. 1 eine Seitenansicht eines gefüllten Magazinstreifens;
Fig. 2 eine Draufsicht auf einen gefüllten Magazinstreifen.

In Fig. 1 ist eine Seitenansicht des Magazinstreifens 1 dargestellt, in die in die Durchgangsöffnungen 5 Befestigungsmittel 4 eingesetzt sind. Die Befestigungsmittel 4 sind hier die Schrauben 4, die als selbstbohrende Klipschrauben ausgeführt sind.
Der Schaft der Schrauben 4 ist in der oberen Schicht 2 gehalten und wird durch die härtere untere Schicht 3 präzise geführt.

In Fig. 2 ist der gleiche Magazinstreifen 1 in Draufsicht dargestellt. Die Köpfe der Schrauben 4 liegen auf der oberen Schicht 2 an.

### Bezugszeichen

- 1: Magazinstreifen
- 2: obere Schicht
- 3: unterste Schicht
- 4: Befestigungsmittel, Schraube
- 5: Durchgangsöffnung

## Patentansprüche

1. Magazinstreifen (1) in länglicher Quaderform mit einer Reihe von Durchgangsöffnungen für die Magazinierung von Befestigungsmitteln (4) zur Verarbeitung in einer Setzmaschine,
**dadurch gekennzeichnet, dass** er aus mindestens zwei flexiblen Schichten (2, 3) Schaumstoff besteht, wobei die unterste Schicht (3) in Verarbeitungsrichtung aus härterem Material als die darüber liegenden Schichten besteht.

2. Magazinstreifen nach Anspruch 1, **dadurch gekennzeichnet, dass** die unterste Schicht (3) dünner als die darüber liegende Schicht (2) ist.

3. Magazinstreifen nach Anspruch 1, **dadurch gekennzeichnet, dass** die Schichten (2, 3) miteinander verklebt oder verschweißt sind.

4. Magazinstreifen nach Anspruch 1, **dadurch gekennzeichnet, dass** als Befestigungsmittel (4) Schrauben, Nieten, Verbindungsbolzen oder Schweißnippel vorgesehen sind.

5. Magazinstreifen nach Anspruch 4, **dadurch gekennzeichnet, dass** der Durchmesser der Durchgangsöffnungen (5) in etwa einem Kerndurchmesser der eingesetzten Befestigungsmittel (4) entspricht.

6. Magazinstreifen nach Anspruch 1, **dadurch gekennzeichnet, dass** in ihn 10 oder 25 Befestigungsmittel (4) einsetzbar sind.

## Claims

1. Magazine strip (1) of elongate rectangular shape with a series of through openings for keeping fastening means (4) for processing in a setting machine,
**characterized in that** it consists of at least two flexible layers (2, 3) of foam, wherein the lowermost layer (3) in the processing direction is made of harder material than the upper layers.

2. Magazine strip according to claim 1, **characterized in that** the lowermost layer (3) is thinner than the adjacent upper layer (2).

3. Magazine strip according to claim 1, **characterized in that** the layers (2, 3) are glued or welded together.

4. Magazine strip according to claim 1, **characterized in that** the fastening means (4) are screws, rivets, bolts or welding connection nipples.

5. Magazine strip according to claim 4, **characterized in that** the diameter of the through-openings (5) is approximately the same as a core diameter of the fixing means (4) used.

6. Magazine strip according to claim 1, **characterized in that** 10 or 25 fastening means (4) can be inserted in it.

## Revendications

1. Bande de stockage (1) de forme rectangulaire allongée avec une série d'ouvertures de passage pour maintenir des moyens de fixation (4) pour le traitement dans une machine de pose,
**caractérisé en ce qu'**il est constitué d'au moins deux couches flexibles (2, 3) de mousse, dans lequel la couche la plus inférieure (3) dans la direction de traitement est réalisé en un matériau plus dur que les couches supérieures.

2. Bande de stockage selon la revendication 1, **caractérisé en ce que** la couche la plus inférieure (3) est plus mince que la couche supérieure adjacente (2).

3. Bande de stockage selon la revendication 1, **caractérisé en ce que** les couches (2, 3) sont collées ou soudées ensemble.

4. Bande de stockage selon la revendication 1, **caractérisé en ce que** les moyens de fixation (4) sont des vis, des rivets, des boulons ou des embouts de raccordement de soudage.

5. Bande de stockage selon la revendication 4, **caractérisé en ce que** le diamètre des ouvertures de passage (5) est approximativement le même que le diamètre intérieur des moyens de fixation (4) utilisées.

6. Bande de stockage selon la revendication 1, **caractérisé en ce que** 10 ou 25 moyens de fixation (4) peuvent être insérés dans celle-ci.
